# EUROPEAN PATENT SPECIFICATION

(11) **EP 2 348 412 B1**
(45) Date of publication and mention of the grant of the patent: **22.08.2012**
(21) Application number: 10195153.1
(22) Date of filing: 15.12.2010
(51) Int. Cl.: G06F 11/16

(54) **Dual field instrument**
Dualfeld-Instrument
Instrument de champ double

(30) Priority: 17.12.2009 JP 2009285836
(43) Date of publication of application: 27.07.2011
(73) Proprietor: Yokogawa Electric Corporation, Musashino-shi Tokyo 180-8750 (JP)
(72) Inventor: Kato, Dai, Tokyo 180-8750 (JP)
(74) Representative: Grünecker, Kinkeldey, Stockmair & Schwanhäusser

(56) References cited:
- EP-A1- 1 857 936
- EP-A1- 2 110 750
- US-A1- 2001 025 352
- US-A1- 2002 073 357
- US-A1- 2009 182 991

## Description

### BACKGROUND OF THE INVENTION

### Field of the Invention

The present invention relates to a dual field instrument that includes a first microprocessor and a second microprocessor performing the same operation process and detects abnormality by collating the operation of the first microprocessor with the operation of the second microprocessor.

Priority is claimed on Japanese Patent Application No. 2009-285836, filed December 17, 2009, the content of which is incorporated herein by reference.

### Description of the Related Art

Japanese Unexamined Patent Application, First Publication No. 2005-309913 discloses a transmitter that includes an operation system of performing an operation based on a sensor measurement value. The transmitter performs an inverse-operation on the result of the operation system to regenerate the sensor measurement value. The transmitter collates the sensor measurement value regenerated by the inverse-operation system with the original sensor measurement value to detect abnormalities. If both of the sensor measurement values do not coincide, then the transmitter can detect an abnormal state.

In some cases, the inverse-operation system cannot regenerate the sensor measurement value. For example, if one operation result is operated based on a plurality of sensor measurement values in the operation system, then the inverse-operation system cannot be configured.

European Patent Application EP-A1-1 857 936 discloses an information processor that doubly performs the same operation and outputs one operation result to the outside. In the information processor, two microprocessors perform the same operation process. The operation results at an arbitrary step or the attached information of the operation are exchanged between the two microprocessors to be collated. If they do not coincide, the information processor determines an abnormal state and outputs an abnormality annunciation signal to the outside.

To detect various abnormalities and to detect them quickly, the frequency of collating the information exchanged between the two microprocessors needs to be increased. Then, the burden on the microprocessors is increased.

### SUMMARY

The invention provides a dual field instrument with the features of claim 1.

Further enhancements are provided by the subsclaims 2-16.

Each of the first code analysis unit and the second code analysis unit may include a linear feedback shift register.

The dual field instrument may further include a signal output unit. If the first collating unit determines that the first code corresponds with the second code, then the signal output unit may output one of a first operation result of the first operation process and a second operation result of the second operation process. If the first collating unit determines that the first code does not corresponds with the second code, then the signal output unit may output an abnormality annunciation signal.

The dual field instrument may further include a first information exchange unit that receives the first code from the first code analysis unit, the first information exchange unit receiving the second code from a second information exchange unit, the first information exchange unit outputting the first code and the second code to the first collating unit, the second information exchange unit that receives the second code from the second code analysis unit, the second information exchange unit receiving the first code from the first information exchange unit, the first information exchange unit outputting the first code and the second code to a second collating unit, and the second collating unit that receives the first code and the second code from the second information exchange unit, the second collating unit collating the first code with the second code so as to determine whether or not the first code corresponds with the second code. The first collating unit may receive the first code and the second code from the first information exchange unit.

A dual field instrument may include a first microprocessor that receives a sensor measurement value, the first microprocessor performing a first operation process to generate a first output value, the first microprocessor outputting a first code, a second microprocessor that receives the sensor measurement value, the second microprocessor performing a second operation process to generate a second output value, the second microprocessor outputting a second code, the second operation process being the same with the first operation process, a first information exchange unit that receives the first code from the first microprocessor, the first information exchange unit receiving the second code from a second information exchange unit, the first information exchange unit outputting the first code and the second code to a first collating unit, the second information exchange unit that receives the second code from the second microprocessor, the second information exchange unit receiving the first code from the first information exchange unit, the second information exchange unit outputting the first code and the second code to a second collating unit, the first collating unit that receives the first code and the second code from the first information exchange unit, the first collating unit collating the first code with the second code so as to determine whether or not the first code corresponds with the second code, and the second collating unit that receives the first code and the second code from the second information exchange unit, the second collating unit collating the first code with the second code so as to determine whether or not the first code corresponds with the second code.

If the first collating unit determines that the first code does not correspond with the second code, then the signal output unit may output a first discrepancy detection signal. If the second collating unit determines that the first code does not correspond with the second code, then the signal output unit may output a second discrepancy detection signal.

The dual field instrument may further include a standardized signal output unit that receives the first output value from the first microprocessor, the standardized signal output unit receiving the second output value from the second microprocessor, the standardized signal output unit receiving the first discrepancy detection signal from the first collating unit, the standardized signal output unit receiving the second discrepancy detection signal from the second collating unit, the standardized signal output unit outputting a standardized signal current.

If neither the first discrepancy detection signal nor the second discrepancy detection signal is input to the standardized signal output unit, then the standardized signal output unit may output 4-20 mA current as the standardized signal current, based on at least one of the first output value of the first microprocessor and the second output value from the second microprocessor.

If at least one of the first discrepancy detection signal and the second discrepancy detection signal is input to the standardized signal output unit, then the standardized signal output unit may output an predetermined abnormality annunciation current as the standardized signal current.

If the first output value from the first microprocessor is different from the second output value from the second microprocessor, then the standardized signal output unit may output an predetermined abnormality annunciation current as the standardized signal current.

The first microprocessor may include a first CPU that performs the first operation process, a first input-output unit that receives the sensor measurement value, the first input-output unit outputting the first output value, a first memory that stores a first program performing the first operation process, a first code analysis unit that outputs the first bus observation code, a first address bus that connects between the first CPU, the first input-output unit, the first memory and the first code analysis unit, and a first data bus that connects between the first CPU, the first input-output unit, the first memory and the first code analysis unit. The second microprocessor may include a second CPU that performs the second operation process, a second input-output unit that receives the sensor measurement value, the second input-output unit outputting the second output value, a second memory that stores a second program performing the second operation process, a second code analysis unit that outputs the second bus observation code, a second address bus that connects between the second CPU, the second input-output unit, the second memory and the second code analysis unit, and a second data bus that connects between the second CPU, the second input-output unit, the second memory and the second code analysis unit.

The first CPU may output a first bus clock. The first code analysis unit may receive the first bus clock. The second CPU may output a second bus clock. The second code analysis unit may receive the second bus clock.

The first code analysis unit may read first data on the first address bus and the first data bus. The first code analysis unit may encode and compress the first data based on the first bus clock to generate the first bus observation code. The second code analysis unit may read second data on the second address bus and the second data bus. The second code analysis unit may encode and compress the second data based on the second bus clock to generate the second bus observation code.

The first code analysis unit may output a change history of a data pattern in each of the first address bus and the data address bus as the first bus observation code. The second code analysis unit may output a change history of a data pattern in each of the second address bus and the second data bus as the second bus observation code. The first bus observation code and the second bus observation code may be codes of serial bit stream.

If data on the first address bus is within a first specified address area, then the first code analysis unit may encode and compress the first data. If data on the second address bus is within a second specified address area, then the second code analysis unit may encode and compress the second data.

Each of the first code analysis unit and the second code analysis unit may include a linear feedback shift register.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a block diagram illustrating a configuration of a dual field instrument in accordance with a first preferred embodiment of the present invention;
FIG. 2 is a block diagram illustrating a configuration of the first microprocessor and the second microprocessor of FIG. 1; and
FIG. 3 is a flowchart illustrating an operation of the first code analysis unit and the second code analysis unit of FIG. 1 when only data in a specified address area is encoded.

### DETAILED DESCRIPTION OF THE PREFERRED EMBODIMENTS

The dual field instrument of the present invention can detect abnormalities with high precision and high speed while the burden of the microprocessor is suppressed.

In the dual field instrument of the present invention, each history of multiple-bit data on the address bus or the data bus in the two microprocessors is compressed and encoded to generate codes. Then the generated codes are collated. The burden on the microprocessor is suppressed. An abnormality can be detected with high precision and high speed.

The present invention will be now described herein with reference to illustrative embodiments. Those skilled in the art will recognize that many alternative embodiments can be accomplished using the teaching of the present invention and that the present invention is not limited to the embodiments illustrated herein for explanatory purposes.

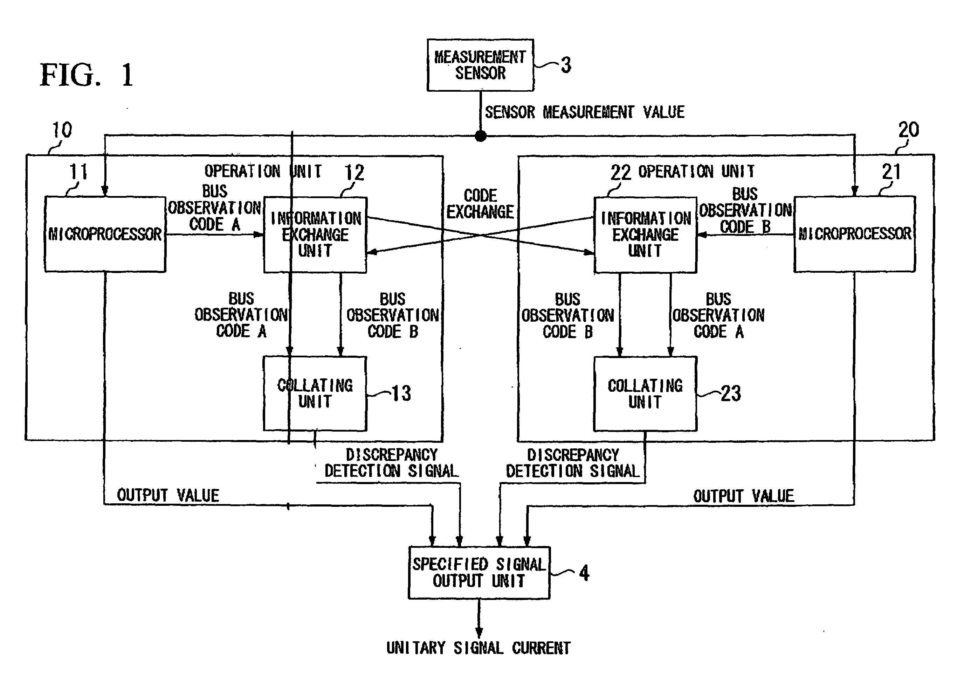

A first preferred embodiment of the present invention will be described. FIG. 1 is a block diagram illustrating a configuration of a dual field instrument in accordance with the first preferred embodiment of the present invention.

The dual field instrument includes a measurement sensor 3, a first operation unit 10, a second operation unit 20, and a standardized signal output unit 4. The measurement sensor 3 outputs a sensor measurement value. The first operation unit 10 and the second operation unit 20 perform the same operation based on the sensor measurement value output from the measurement sensor 3. The standardized signal output unit 4 outputs a single signal as a standardized signal current based on signals and output values that are output from the first operation unit 10 and the second operation unit 20.

The measurement sensor 3 includes a sensor unit and a measurement circuit. The sensor unit measures physical quantities such as a temperature and a pressure. The measurement circuit converts an output signal of the sensor unit to a digital value, and outputs it as the sensor measurement value.

The first operation unit 10 and the second operation unit 20 have the same configuration.

The first operation unit 10 includes a first microprocessor 11, a first information exchange unit 12, and a first collating unit 13. The first microprocessor 11 receives the sensor measurement value from the measurement sensor 3 and performs the above-mentioned operation to output a bus observation code A to the first information exchange unit 12 and output a first output value to the standardized signal output unit 4. The first information exchange unit 12 receives the bus observation code A from the first microprocessor 11 and outputs the bus observation code A to the first collating unit 13 3 and a second information exchange unit 22 in the second operation unit 20. Also, the first information exchange unit 12 receives a bus observation code B from the second information exchange unit 22 and outputs the bus observation code B to the first collating unit 13. That is, the first information exchange unit 12 performs a code exchange. The first collating unit 13 receives the bus observation code A and the bus observation code B from the first information exchange unit 12 and collates the bus observation code A with the bus observation code B. If the bus observation code A does not correspond to the bus observation code B, then the first collating unit 13 outputs a first discrepancy detection signal to the standardized signal output unit 4.

In the same way, the second operation unit 20 includes a second microprocessor 21, a second information exchange unit 22, and a second collating unit 23. The second microprocessor 21 receives the sensor measurement value from the measurement sensor 3 and performs the above-mentioned operation to output a bus observation code B to the second information exchange unit 22 and to output a second output value to the standardized signal output unit 4. The second information exchange unit 22 receives the bus observation code B from the second microprocessor 21 and outputs the bus observation code B to the second collating unit 23 and the first information exchange unit 12 in the first operation unit 10. Also, the second information exchange unit 22 receives a bus observation code A from the first information exchange unit 12 and outputs the bus observation code A to the second collating unit 23. That is, the second information exchange unit 22 performs the code exchange. The second collating unit 23 receives the bus observation code A and the bus observation code B from the second information exchange unit 22 and collates the bus observation code A with the bus observation code B. If the bus observation code A does not correspond to the bus observation code B, then the second collating unit 23 outputs a second discrepancy detection signal to the standardized signal output unit 4.

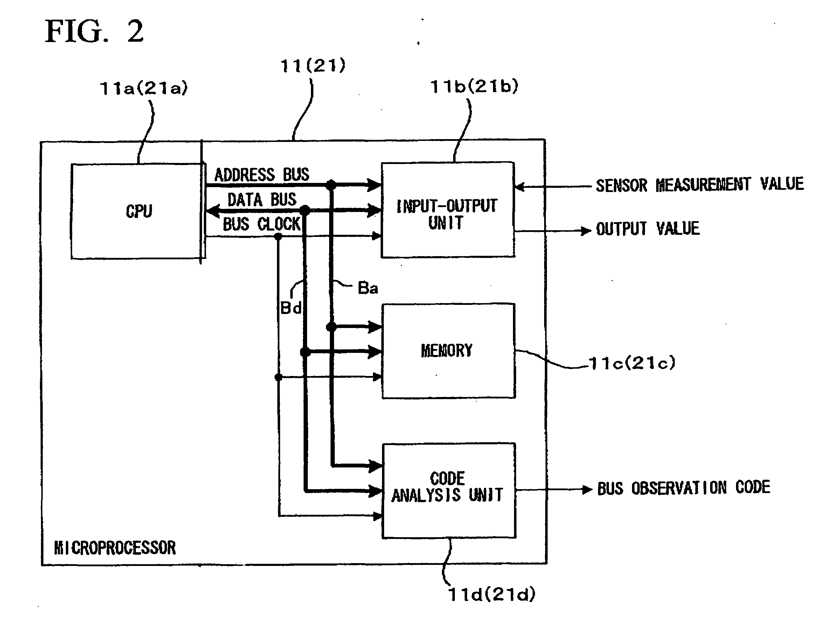

FIG. 2 is a block diagram illustrating a configuration of the first microprocessor 11 and the second microprocessor 21. The first microprocessor 11 and the second microprocessor 21 have the same configuration.

The first microprocessor 11 includes a first CPU 11 a, a first input-output unit 11b, a first memory 11c, and a first code analysis unit 11 d. The first CPU 11 a, the first input-output unit 11 b, the first memory 11 c, and the first code analysis unit 11 d are connected to each other through an address bus Ba and a data bus Bd. The first CPU 11a outputs a bus clock to the first input-output unit 11b, the first memory 11c, and the first code analysis unit 11 d. The first input-output unit 11 b controls input and output of data between the first CPU 11 a and outside of the first microprocessor 11. The first input-output unit 11 b receives the sensor measurement value from the measurement sensor 3 and outputs the first output value to the standardized signal output unit 4. The first CPU 11 a reads and writes data stored in the first memory 11c during the operation. The first code analysis unit 11d receives and encodes data on the address bus Ba and the data bus Bd and outputs the bus observation code A to the first information exchange unit 12.

In the same way, the second microprocessor 21 includes a second CPU 21 a, a second input-output unit 21 b, a second memory 21 c, and a second code analysis unit 21 d. The second CPU 21 a, the second input-output unit 21 b, the second memory 21 c, and the second code analysis unit 21 d are connected each other through an address bus Ba and a data bus Bd. The second CPU 21a outputs a bus clock to the second input-output unit 21 b, the second memory 21 c, and the second code analysis unit 21d. The second input-output unit 21 b controls input and output of data between the second CPU 21a and outside of the second microprocessor 21. The second input-output unit 21 b receives the sensor measurement value from the measurement sensor 3 and outputs the second output value to the standardized signal output unit 4. The second CPU 21 a reads and writes data stored in the second memory 21 c during the operation. The second code analysis unit 21 d receives and encodes data on the address bus Ba and the data bus Bd and outputs the bus observation code B to the second information exchange unit 22.

Next, the operation of the dual field instrument in accordance with the first preferred embodiment of the present invention will be described.

The sensor measurement value from the measurement sensor 3 is input to the first microprocessor 11 and the second microprocessor 21. The first microprocessor 11 and the second microprocessor 21 respectively perform the same operation based on the sensor measurement value. The first microprocessor 11 outputs the result of the operation as the first output value to the standardized signal output unit 4. The second microprocessor 21 outputs the result of the operation as the second output value to the standardized signal output unit 4.

The first CPU 11 a receives the sensor measurement value through the first input-output unit 11b. Then, the first CPU 11a performs the operation based on the program stored in the first memory 11 c and outputs the result of the operation to the standardized signal output unit 4 through the first input-output unit 11b. The first code analysis unit 11d reads data on the address bus Ba and the data bus Bd. Then, the first code analysis unit 1 1d encodes and compresses the data at each bus clock to output as the bus observation code A.

Similarly, the second CPU 21 a receives the sensor measurement value through the second input-output unit 21b. Then, the second CPU 21a performs the operation based on the program stored in the second memory 21 c and outputs the result of the operation to the standardized signal output unit 4 through the second input-output unit 21b. The second code analysis unit 21d reads data on the address bus Ba and the data bus Bd. Then, the second code analysis unit 21d encodes and compresses the data at each bus clock to output as the bus observation code B.

The first code analysis unit 11d and the second code analysis unit 21d may have a general configuration having a linear feedback shift register. The first code analysis unit 11 d outputs a change history of a data pattern in each bus as the bus observation code A. Similarly, the second code analysis unit 21d outputs a change history of a data pattern in each bus as the bus observation code B. The data pattern is a signal pattern of multiple-bits. The bus observation code A and the bus observation code B are codes of serial bit stream. The history of the data pattern in each bus can be observed without affecting the processes of the first CPU 11 a and the second CPU 21 a. Encoding of the data pattern in each bus may be performed by a general method that is disclosed in "Testing by feedback shift register", IEEE Transactions on Computers Vol. C-29, No. 7, pp. 668-673, July 1980, for example.

The bus observation code A output from the first code analysis unit 11d is received by the first information exchange unit 12. The bus observation code B output from the second code analysis unit 21 d is received by the second information exchange unit 22. The bus observation code A and the bus observation code B are exchanged by the first information exchange unit 12 and the second information exchange unit 22 respectively. The first information exchange unit 12 synchronizes the bus observation code A with the bus observation code B. The second information exchange unit 22 synchronizes the bus observation code B with the bus observation code A.

The first information exchange unit 12 outputs the synchronized bus observation code A and the synchronized bus observation code B to the first collating unit 13. The second information exchange unit 22 outputs the synchronized bus observation code A and the synchronized bus observation code B to the second collating unit 23.

The first collating unit 13 compares the synchronized bus observation code A with the synchronized bus observation code B to detect discrepancy between the synchronized bus observation code A and the synchronized bus observation code B. The second collating unit 23 compares the synchronized bus observation code B with the synchronized bus observation code A to detect discrepancies between the synchronized bus observation code A and the synchronized bus observation code B.

If the first collating unit 13 detects discrepancy, then the first collating unit 13 outputs the first discrepancy detection signal to the standardized signal output unit 4. If the second collating unit 23 detects a discrepancy, then the second collating unit 23 outputs the second discrepancy detection signal to the standardized signal output unit 4.

If neither the first discrepancy detection signal nor the second discrepancy detection signal is input to the standardized signal output unit 4, then the standardized signal output unit 4 outputs standard 4-20 mA current loop signal as the standardized signal current, based on the first output value from the first microprocessor 11 or the second output value from the second microprocessor 21 or both the first output value and the second output value.

If at least one of the first discrepancy detection signal and the second discrepancy detection signal is input to the standardized signal output unit 4, then the standardized signal output unit 4 outputs an abnormality annunciation current that is predetermined as the standardized signal current. Thereby, occurrence of abnormality is annunciated. In the first preferred embodiment of the present invention, two information exchange units and two collating units are disposed. Therefore, an abnormality of the process in the information exchange unit and the collating unit can also be detected.

When neither the first discrepancy detection signal nor the second discrepancy detection signal is input to the standardized signal output unit 4, if the first output value from the first microprocessor 11 is different from the second output value from the second microprocessor 21, then the standardized signal output unit 4 may output the abnormality annunciation current.

As described above, the dual field instrument in accordance with the first preferred embodiment of the present invention compresses and encodes histories of CPU buses of two microprocessors that perform the same operation process to generate codes, and collates the codes to determine sequentially whether or not the operation process has abnormality. Therefore, abnormality in the operation process can be detected with high precision and with high speed.

An additional process of exchanging information or collating the exchanged information need not be added to the program of the operation process. Therefore, the burden on the microprocessor is decreased, and decline of the processing power in the operation process can be avoided.

Codes generated by the code analysis units are collated. Thereby, the amount of the information to be collated is less than in the case of collating data of the CPU bus directly. Therefore, a reduction in power consumption and cut to the cost of system can be attained.

The area of collating can be made smaller than in the case of collating the operation result at each operation step. Thereby, the degree of accuracy in detecting abnormalities can be increased.

The dual field instrument in accordance with the first preferred embodiment of the present invention continuously performs the encoding based on data on the address bus and the data bus of the CPU. The information of the bus that is encoded may be limited to a specified address.

A first program that defines the operation process performed by the two microprocessors and a second program that defines other processes may be separately stored on the memory. That is, the address area storing the first program and the address area storing the second program are separated. Then, only the data in the address area storing the first program may be encoded.

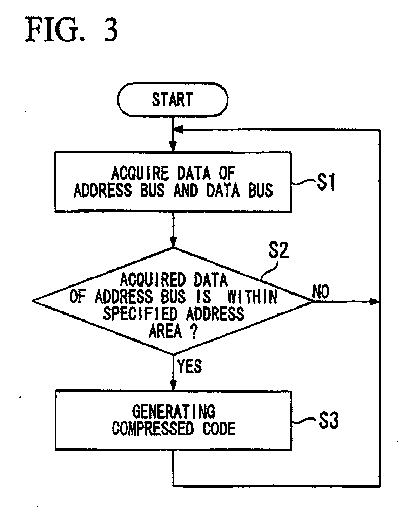

FIG. 3 is a flowchart illustrating an operation of the first code analysis unit 11d and the second code analysis unit 21 d when only data in a specified address area is encoded. The specified address area is the address area storing the first program that defines the operation process performed by the two microprocessors.

In step S 1 of FIG. 3, the first code analysis unit 11 d and the second code analysis unit 21 d respectively acquire data from the address bus and the data bus at a timing based on the bus clock.

Next, in step S2, the first code analysis unit 11d and the second code analysis unit 21 d respectively determine whether or not the acquired data from the address bus is within the specified address area. If the acquired data from the address bus is the specified address, then go to step S3. If the acquired data from the address bus is not the specified address, then return to the step S 1.

In the step S3, codes are generated by the first code analysis unit 11d and the second code analysis unit 21 d compressing and encoding the acquired data from the address bus and the data bus that is acquired in the step S1, then return to the step S1.

As described above, in the process of FIG. 3, encoding is performed only when the data acquired from the address bus is within the specified address area. All of the operation process is not necessary to be synchronized. Only the operation process corresponding to the first program needs to be synchronized. Therefore, the process of synchronizing can be performed easily. For example, a first series of process that performs the encoding operation and a second series of process that does not need the encoding operation may be repeated alternately at a constant cycle. Thereby, the phase of the process can be detected easily. The burden in performing the synchronizing process can be decreased.

The data on the bus that is to be encoded is limited, and two microprocessors may respectively perform different processes except the first program.

As described above, in the dual field instrument of the present invention, histories of multiple-bit data on the address bus and the data bus of the two microprocessors are respectively compressed and encoded to generate codes. Then, the generated codes are collated. Thereby, the burden on the microprocessor is suppressed. An abnormality can be detected with high precision and high speed.

As used herein, the following directional terms "forward, rearward, above, downward, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. Fo r example, these terms can be construed as including a deviation of at least ± 5 percents of the modified term if this deviation would not negate the meaning of the word it modifies.

The term "unit" is used to describe a component, section or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention.

The present invention can be applied to any dual field instrument that includes two microprocessors performing the same operation process and detects an abnormality by collating the operation processes of the two microprocessors. Accordingly, the present invention is not to be considered as being limited by the foregoing description, and is only limited by the scope of the claims.

## Claims

1. A dual field instrument comprising:
a first microprocessor (11) that includes a first address bus (Ba) and a first data bus (Bd), the first microprocessor (11) performing a first operation process;
a second microprocessor (21) that includes a second address bus (Ba) and a second data bus (Bd), the second microprocessor performing a second operation process,
**characterized by**
a first code analysis unit (11d) that compresses and encodes histories of data on at least one of the first address bus (Ba) and the first data bus (Bd) to generate a first code by a first process;
a second code analysis unit (21d) that compresses and encodes histories of data on at least one of the second address bus (Ba) and the second data bus (Bd) to generate a second code by a second process; and
a first collating unit (13) that collates the first code with the second code so as to determine whether or not the first code corresponds with the second code; and
the first process is the same with the second process; and
the first process is performed when data on the first address bus (Ba) is within a specified address area; and
the second process is performed when data on the second address bus (Ba) is within the specified address area; and
the specified address area is an address area of a memory (11c, 21c) that stores a first program defining the first operation process and the second operation process; and
the first program that defines the operation process performed by the two microprocessors and a second program that defines other processes are separately stored on the memory (11c, 21c).

2. The dual field instrument according to claim 1, wherein
each of the first code analysis unit (11d) and the second code analysis unit (21d) includes a linear feedback shift register.

3. The dual field instrument according to claim 1, further comprising a signal output unit (4), and wherein
if the first collating unit (13) determines that the first code corresponds with the second code, then the signal output unit outputs one of a first operation result of the first operation process and a second operation result of the second operation process, and wherein
if the first collating unit (13) determines that the first code does not correspond with the second code, then the signal output unit outputs an abnormality annunciation signal.

4. The dual field instrument according to claim 1, further comprising:
a first information exchange unit (12) that receives the first code from the first code analysis unit (11d), the first information exchange unit (12) receiving the second code from a second information exchange unit (22), the first information exchange unit (12) outputting the first code and the second code to the first collating unit (13);
the second information exchange unit (22) that receives the second code from the second code analysis unit (21d), the second information exchange unit (22) receiving the first code from the first information exchange unit (12), the second information exchange unit (22) outputting the first code and the second code to a second collating unit; and
the second collating unit (23) that receives the first code and the second code from the second information exchange unit (22), the second collating unit (23) collating the first code with the second code so as to determine whether or not the first code corresponds with the second code, and
wherein the first collating unit (13) receives the first code and the second code from the first information exchange unit (12).

5. The dual field instrument according to claim 1, further comprising:
the first microprocessor (11) receives a sensor measurement value, the first microprocessor (11) performing a first operation process to generate a first output value, the first microprocessor (11) outputting a first code;
the second microprocessor (21) receives the sensor measurement value, the second microprocessor (21) performing a second operation process to generate a second output value, the second microprocessor (21) outputting a second code, the second operation process being the same with the first operation process;
a first information exchange unit (12) that receives the first code from the first microprocessor (11), the first information exchange unit (12) receiving the second code from a second information exchange unit (22), the first information exchange unit (12) outputting the first code and the second code to the first collating unit (13);
a second information exchange unit (22) that receives the second code from the second microprocessor (21), the second information exchange unit (22) receiving the first code from the first information exchange unit (12), the second information exchange unit (22) outputting the first code and the second code to a second collating unit (23);
the first collating unit (13) that receives the first code and the second code from the first information exchange unit (12); and
a second collating unit (23) that receives the first code and the second code from the second information exchange unit (22), the second collating unit (23) collating the first code with the second code so as to determine whether or not the first code corresponds with the second code.

6. The dual field instrument according to claim 5, wherein
if the first collating unit (13) determines that the first code does not correspond with the second code, then the first collating unit outputs a first discrepancy detection signal, and
if the second collating unit (23) determines that the first code does not correspond with the second code, then the second collating unit outputs a second discrepancy detection signal.

7. The dual field instrument according to claim 6, further comprising:
a standardized signal output unit that receives the first output value from the first microprocessor (11), the standardized signal output unit (4) receiving the second output value from the second microprocessor (21), the standardized signal output unit (4) receiving the first discrepancy detection signal from the first collating unit (13), the standardized signal output unit (4) receiving the second discrepancy detection signal from the second collating unit (23), the standardized signal output unit (4) outputting a standardized signal current.

8. The dual field instrument according to claim 7, wherein
if neither the first discrepancy detection signal nor the second discrepancy detection signal is input to the standardized signal output unit (4), then the standardized signal output unit outputs 4-20 mA current as the standardized signal current, based on at least one of the first output value of the first microprocessor (11) and the second output value from the second microprocessor (21).

9. The dual field instrument according to claim 7, wherein
if at least one of the first discrepancy detection signal and the second discrepancy detection signal is input to the standardized signal output unit (4), then the standardized signal output unit (4) outputs a predetermined abnormality annunciation current as the standardized signal current.

10. The dual field instrument according to claim 7, wherein
if the first output value from the first microprocessor (11) is different from the second output value from the second microprocessor (21), then the standardized signal output unit (4) outputs a predetermined abnormality annunciation current as the standardized signal current.

11. The dual field instrument according to claim 5, wherein
the first microprocessor (11) comprising:
a first CPU (11a) that performs the first operation process;
a first input-output unit (11b) that receives the sensor measurement value, the first input-output unit (11b) outputting the first output value;
a first memory (11c) that stores a first program performing the first operation process;
a first code analysis unit (11d) that outputs the first bus observation code;
a first address bus (Ba) that connects between the first CPU (11a), the first input-output unit (11b), the first memory (11c) and the first code analysis unit (11d); and
a first data bus (Bd) that connects between the first CPU (11a), the first input-output unit (11b), the first memory (11c) and the first code analysis unit (11d), and
the second microprocessor (21) comprising:
a second CPU (21 a) that performs the second operation process;
a second input-output unit (21 b) that receives the sensor measurement value, the second input-output unit (21b) outputting the second output value;
a second memory (21c) that stores a second program performing the second operation process;
a second code analysis unit (21 d) that outputs the second bus observation code;
a second address bus (Ba) that connects between the second CPU (21a), the second input-output unit (21b), the second memory (21c) and the second code analysis unit (21d); and
a second data bus (Bd) that connects between the second CPU (21 a), the second input-output unit (21b), the second memory (21c) and the second code analysis unit (21d).

12. The dual field instrument according to claim 11, wherein
the first CPU (11a) outputs a first bus clock, the first code analysis unit (11d) receives the first bus clock,
the second CPU (21a) outputs a second bus clock, and the second code analysis unit (21 d) receives the second bus clock.

13. The dual field instrument according to claim 12, wherein
the first code analysis unit (11d) reads first data on the first address bus (Ba) and the first data bus (Bd), the first code analysis unit (11d) encodes and compresses the first data based on the first bus clock to generate the first bus observation code,
the second code analysis (21 d) unit reads second data on the second address bus (Ba) and the second data bus (Bd), and the second code analysis unit (21d) encodes and compresses the second data based on the second bus clock to generate the second bus observation code.

14. The dual field instrument according to claim 11, wherein
the first code analysis unit (11d) outputs a change history of a data pattern in each of the first address bus (Ba) and the data address bus (Bd) as the first bus observation code,
the second code analysis unit (21d) outputs a change history of a data pattern in each of the second address bus (Ba) and the second data bus (Bd) as the second bus observation code,and
the first bus observation code and the second bus observation code are codes of serial bit stream.

15. The dual field instrument according to claim 13, wherein
if data on the first address bus (Ba) is within a first specified address area, then the first code analysis unit (11d) encodes and compresses the first data, and
if data on the second address bus (Ba) is within a second specified address area, then the second code analysis unit (21d) encodes and compresses the second data.

16. The dual field instrument according to claim 11, wherein
each of the first code analysis unit (11d) and the second code analysis unit (21d) includes a linear feedback shift register.

## Patentansprüche

1. Doppelfeld-Instrument, das umfasst:
einen ersten Mikroprozessor (11), der einen ersten Adress-Bus (Ba) und einen ersten Daten-Bus (Bd) enthält, wobei der erste Mikroprozessor (11) einen ersten Operations-Prozess durchführt;
einen zweiten Mikroprozessor (21), der einen zweiten Adress-Bus (Ba) und einen zweiten Daten-Bus (Bd) enthält, wobei der zweite Mikroprozessor einen zweiten Operations-Prozess durchführt,
**gekennzeichnet durch**
eine erste Codeanalyse-Einheit (11d), die Verläufe von Daten an dem ersten Adress-Bus (Ba) oder/und dem ersten Daten-Bus (Bd) komprimiert und kodiert, um einen ersten Code mit einem ersten Prozess zu erzeugen;
eine zweite Codeanalyse-Einheit (21d), die Verläufe von Daten an dem zweiten Adress-Bus (Ba) oder/und dem zweiten Daten-Bus (Bd) komprimiert und kodiert, um einen zweiten Code mit einem zweiten Prozess zu erzeugen; und
eine erste Vergleichs-Einheit (13), die den ersten Code mit dem zweiten Code vergleicht, um festzustellen, ob der erste Code dem zweiten Code entspricht oder nicht; und
wobei der erste Prozess der gleiche ist wie der zweite Prozess;
der erste Prozess durchgeführt wird, wenn sich Daten an dem ersten Adress-Bus (Ba) innerhalb eines vorgegebenen Adressbereiches befinden;
der zweite Prozess durchgeführt wird, wenn sich Daten an dem zweiten Adress-Bus (Ba) innerhalb des vorgegebenen Adressbereiches befinden;
der vorgegebene Adressbereich ein Adressbereich eines Speichers (11c, 21c) ist, der ein erstes Programm speichert, das den ersten Operations-Prozess und den zweiten Operations-Prozess definiert; und
das erste Programm, das den **durch** die zwei Mikroprozessoren durchgeführten Operations-Prozess definiert, und ein zweites Programm, das andere Prozesse definiert, separat in dem Speicher (11c, 21c) gespeichert sind.

2. Doppelfeld-Instrument nach Anspruch 1, wobei
die erste Codeanalyse-Einheit (11 d) und die zweite Codeanalyse-Einheit (21d) jeweils ein linear rückgekoppeltes Schieberegister enthalten.

3. Doppelfeld-Instrument nach Anspruch 1, das des Weiteren eine Signalausgabeeinheit (4) umfasst, und wobei
wenn die erste Vergleichs-Einheit (13) feststellt, dass der erste Code dem zweiten Code entspricht, die Signalausgabe-Einheit ein erstes Operations-Ergebnis des ersten Operations-Prozesses und ein zweites Operations-Ergebnis des zweiten Operations-Prozesses ausgibt, und wobei
wenn die erste Vergleichs-Einheit (13) feststellt, dass der erste Code dem zweiten Code nicht entspricht, die Signalausgabeeinheit ein Signal zum Verkünden von Abnormalität ausgibt.

4. Doppelfeld-Instrument nach Anspruch 1, das des Weiteren umfasst:
eine erste Informationsaustausch-Einheit (12), die den ersten Code von der ersten Codeanalyse-Einheit (11d) empfängt, wobei die erste Informationsaustausch-Einheit (12) den zweiten Code von einer zweiten Informationsaustausch-Einheit (22) empfängt und die erste Informationsaustausch-Einheit (12) den ersten sowie den zweiten Code an die erste Vergleichs-Einheit (13) ausgibt;
die zweite Informationsaustausch-Einheit (22), die den zweiten Code von der zweiten Codeanalyse-Einheit (21 d) empfängt, wobei die zweite Informationsaustausch-Einheit (22) den ersten Code von der ersten Informationsaustausch-Einheit (12) empfängt und die zweite Informationsaustausch-Einheit (22) den ersten Code sowie den zweiten Code an eine zweite Vergleichs-Einheit ausgibt; und
die zweite Vergleichs-Einheit (23), die den ersten Code sowie den zweiten Code von der zweiten Informationsaustausch-Einheit (22) empfängt, wobei die zweite Vergleichs-Einheit (23) den ersten Code mit dem zweiten Code vergleicht, um festzustellen, ob der erste Code dem zweiten Code entspricht oder nicht, und
wobei die erste Vergleichs-Einheit (13) den ersten Code sowie den zweiten Code von der ersten Informationsaustausch-Einheit (12) empfängt.

5. Doppelfeld-Instrument nach Anspruch 1, das des Weiteren umfasst:
den ersten Mikroprozessor (11), der einen Sensor-Messwert empfängt, wobei der erste Mikroprozessor (11) einen ersten Operations-Prozess durchführt, um einen ersten Ausgabewert zu erzeugen, und der erste Mikroprozessor (11) einen ersten Code ausgibt;
den zweiten Mikroprozessor (21), der den Sensor-Messwert empfängt, wobei der zweite Mikroprozessor (21) einen zweiten Operations-Prozess durchführt, um einen zweiten Ausgabewert zu erzeugen, der zweite Mikroprozessor (21) einen zweiten Code ausgibt und der zweite Operations-Prozess der gleiche ist wie der erste Operations-Prozess;
eine erste Informationsaustausch-Einheit (12), die den ersten Code von dem ersten Mikroprozessor (11) empfängt, wobei die erste Informationsaustausch-Einheit (12) den zweiten Code von einer zweiten Informationsaustausch-Einheit (22) empfängt und die erste Informationsaustausch-Einheit (12) den ersten Code sowie den zweiten Code an die erste Vergleichs-Einheit (13) ausgibt;
eine zweite Informationsaustausch-Einheit (22), die den zweiten Code von dem zweiten Mikroprozessor (21) empfängt, wobei die zweite Informationsaustausch-Einheit (22) den ersten Code von der ersten Informationsaustausch-Einheit (12) empfängt und die zweite Informationsaustausch-Einheit (22) den ersten Code sowie den zweiten Code an eine zweite Vergleichs-Einheit (23) ausgibt;
die erste Vergleichs-Einheit (13), die den ersten Code sowie den zweiten Code von der ersten Informationsaustausch-Einheit (12) empfängt; und
eine zweite Vergleichs-Einheit (23), die den ersten Code sowie den zweiten Code von der zweiten Informationsaustausch-Einheit (22) empfängt, wobei die zweite Vergleichs-Einheit (23) den ersten Code mit dem zweiten Code vergleicht, um festzustellen, ob der erste Code dem zweiten Code entspricht oder nicht.

6. Doppelfeld-Instrument nach Anspruch 5, wobei
wenn die erste Vergleichs-Einheit (13) feststellt, dass der erste Code dem zweiten Code nicht entspricht, die erste Vergleichs-Einheit ein erstes Abweichungserfassungs-Signal ausgibt, und
wenn die zweite Vergleichs-Einheit (23) feststellt, dass der erste Code dem zweiten Code nicht entspricht, die zweite Vergleichs-Einheit ein zweites Abweichungserfassungs-Signal ausgibt.

7. Doppelfeld-Instrument nach Anspruch 6, das des Weiteren umfasst:
eine Einheit zum Ausgeben eines standardisierten Signals, die den ersten Ausgabewert von dem ersten Mikroprozessor (11) empfängt, wobei die Einheit (4) zum Ausgeben eines standardisierten Signals den zweiten Ausgabewert von dem zweiten Mikroprozessor (21) empfängt, die Einheit (4) zum Ausgeben eines standardisierten Signals das erste Abweichungserfassungs-Signal von der ersten Vergleichs-Einheit (13) empfängt, die Einheit (4) zum Ausgeben eines standardisierten Signals das zweite Abweichungserfassungs-Signal von der zweiten Vergleichs-Einheit (23) empfängt und die Einheit (4) zum Ausgeben eines standardisierten Signals ein standardisiertes Stromsignal ausgibt.

8. Doppelfeld-Instrument nach Anspruch 7, wobei
wenn weder das erste Abweichungserfassungs-Signal noch das zweite Abweichungserfassungs-Signal in die Einheit (4) zum Ausgeben eines standardisierten Signals eingegeben wird, die Einheit zum Ausgeben eines standardisierten Signals auf Basis des ersten Ausgabewertes des ersten Mikroprozessors (11) oder/und des zweiten Ausgabewertes von dem zweiten Mikroprozessor (21) Strom mit 4-20 mA als standardisiertes Stromsignal ausgibt.

9. Doppelfeld-Instrument nach Anspruch 7, wobei
wenn das erste Abweichungserfassungs-Signal oder/oder das zweite Abweichungserfassungs-Signal in die Einheit (4) zum Ausgeben eines standardisierten Signals eingegeben wird, die Einheit (4) zum Ausgeben eines standardisierten Signals einen vorgegebenen Strom zum Verkünden von Abnormalität als standardisiertes Stromsignal ausgibt.

10. Doppelfeld-Instrument nach Anspruch 7, wobei
wenn sich der erste Ausgabewert von dem ersten Mikroprozessor (11) von den zweiten Ausgabewert von dem zweiten Mikroprozessor (21) unterscheidet, die Einheit (4) zum Ausgeben eines standardisierten Signals einen vorgegebenen Strom zum Verkünden von Abnormalität als standardisiertes Stromsignal ausgibt.

11. Doppelfeld-Instrument nach Anspruch 5, wobei
der erste Mikroprozessor (11) umfasst:
eine erste CPU (11a), die den ersten Operations-Prozess durchführt;
eine erste Eingabe-Ausgabe-Einheit (11 b), die den Sensor-Messwert empfängt, wobei die erste Eingabe-Ausgabe-Einheit (11 b) den ersten Ausgabewert ausgibt;
einen ersten Speicher (11 c), der ein erstes Programm zum Durchführen des ersten Operations-Prozesses durchführt;
eine erste Codeanalyse-Einheit (11d), die den ersten Busüberwachungs-Code ausgibt;
einen ersten Adress-Bus (Ba), der Verbindung zwischen der ersten CPU (11a), der ersten Eingabe-Ausgabe-Einheit (11 b), dem ersten Speicher (11 c) und der ersten Codeanalyse-Einheit (11d) herstellt; und
einen ersten Datenbus (Bd), der Verbindung zwischen der ersten CPU (11a), der ersten Eingabe-Ausgabe-Einheit (11b), dem ersten Speicher (11c) und der ersten Codeanalyse-Einheit (11d) herstellt, und
den zweiten Mikroprozessor (21), der umfasst:
eine zweite CPU (21 a), die den zweiten Operations-Prozess durchführt;
eine zweite Eingabe-Ausgabe-Einheit (21 b), die den Sensor-Messwert empfängt, wobei die zweite Eingabe-Ausgabe-Einheit (21 b) den zweiten Ausgabewert ausgibt;
einen zweiten Speicher (21c), der ein zweites Programm zum Durchführen des zweiten Operations-Prozesses durchführt;
eine zweite Codeanalyse-Einheit (21d), die den zweiten Busüberwachungs-Code ausgibt;
einen zweiten Adress-Bus (Ba), der Verbindung zwischen der zweiten CPU (21a), der zweiten Eingabe-Ausgabe-Einheit (21 b), dem zweiten Speicher (21 c) und der zweiten Codeanalyse-Einheit (21d) herstellt; und
einen zweiten Datenbus (Bd), der Verbindung zwischen der zweiten CPU (21 a), der zweiten Eingabe-Ausgabe-Einheit (21 b), dem zweiten Speicher (21c) und der zweiten Codeanalyse-Einheit (21d) herstellt.

12. Doppelfeld-Instrument nach Anspruch 11, wobei
die erste CPU (11a) einen ersten Bus-Takt ausgibt und die erste Codeanalyse-Einheit (11d) den ersten Bus-Takt empfängt,
die zweite CPU (21 a) einen zweiten Bus-Takt ausgibt und die zweite Codeanalyse-Einheit (21 d) den zweiten Bus-Takt empfängt.

13. Doppelfeld-Instrument nach Anspruch 12, wobei
die erste Codeanalyse-Einheit (11d) erste Daten an dem ersten Adress-Bus (Ba) sowie dem ersten Daten-Bus (Bd) liest und die erste Codeanalyse-Einheit (11d) die ersten Daten auf Basis des ersten Bus-Taktes kodiert und komprimiert, um den ersten Busüberwachungs-Code zu erzeugen,
die zweite Codeanalyse-Einheit (21d) zweite Daten an dem zweiten Adress-Bus (Ba) sowie dem zweiten Daten-Bus (Bd) liest und die zweite Codeanalyse-Einheit (21d) die zweiten Daten auf Basis des zweiten Bus-Taktes kodiert und komprimiert, um den zweiten Busüberwachungs-Code zu erzeugen.

14. Doppelfeld-Instrument nach Anspruch 11, wobei
die erste Codeanalyse-Einheit (11d) einen Änderungsverlauf eines Datenmusters in dem ersten Adress-Bus (Ba) sowie dem ersten Daten-Bus (Bd) als den ersten Busüberwachungs-Code ausgibt,
die zweite Codeanalyse-Einheit (21d) einen Änderungsverlauf eines Datenmusters in dem zweiten Adress-Bus (Ba) sowie dem zweiten Daten-Bus (Bd) als den zweiten Busüberwachungs-Code ausgibt, und
der erste Busüberwachungs-Code sowie der zweite Busüberwachungs-Code Codes eines seriellen Bitstroms sind.

15. Doppelfeld-Instrument nach Anspruch 13, wobei
wenn sich Daten an dem ersten Adress-Bus (Ba) innerhalb eines ersten vorgegebenen Adressbereiches befinden, die erste Codeanalyse-Einheit (11d) die ersten Daten kodiert und komprimiert, und
wenn sich Daten an dem zweiten Adress-Bus (Ba) innerhalb eines zweiten vorgegebenen Adressbereiches befinden, die zweite Codeanalyse-Einheit (21d) die zweiten Daten kodiert und komprimiert.

16. Doppelfeld-Instrument nach Anspruch 11, wobei
die erste Codeanalyse-Einheit (11d) und die zweite Codeanalyse-Einheit (21d) jeweils ein linear rückgekoppeltes Schieberegister enthalten.

## Revendications

1. Instrument à double champ comprenant :
un premier microprocesseur (11) qui comprend un premier bus d'adresse (Ba) et un premier bus de données (Bd), le premier microprocesseur (11) exécutant un premier traitement d'opération ;
un second microprocesseur (21) qui comprend un second bus d'adresse (Ba) et un second bus de données (Bd), le second microprocesseur exécutant un second traitement d'opération,
**caractérisé par**
une première unité d'analyse de code (11d) qui compresse et code des historiques de données sur au moins l'un parmi le premier bus d'adresse (Ba) et le premier bus de données (Bd) afin de générer un premier code par un premier traitement ;
une seconde unité d'analyse de code (21d) qui compresse et code des historiques de données sur au moins l'un parmi le second bus d'adresse (Ba) et le second bus de données (Bd) afin de générer un second code par un second traitement ; et
une première unité de comparaison (13) qui compare le premier code et le second code de manière à déterminer si le premier code correspond ou non au second code ; et
le premier traitement est le même que le second traitement ; et
le premier traitement est exécuté lorsque des données sur le premier bus d'adresse (Ba) sont comprises dans une zone d'adresse spécifiée ; et
le second traitement est exécuté lorsque des données sur le second bus d'adresse (Ba) sont comprises dans la zone d'adresse spécifiée ; et
la zone d'adresse spécifiée est une zone d'adresse d'une mémoire (11c, 21c) qui stocke un premier programme définissant le premier traitement d'opération et le second traitement d'opération ; et
le premier programme qui définit le traitement d'opération exécuté par les deux microprocesseurs et un second programme qui définit d'autres traitements sont stockés séparément sur la mémoire (11c, 21c).

2. Instrument à double champ conformément à la revendication 1, dans lequel
la première unité d'analyse de code (11d) et la seconde unité d'analyse de code (21d) comprennent chacune un registre à décalage à rebouclage linéaire.

3. Instrument à double champ conformément à la revendication 1 comprenant en outre une unité de délivrance de signal (4), et dans lequel
si la première unité de comparaison (13) détermine que le premier code correspond au second code, alors l'unité de délivrance de signal délivre un premier résultat d'opération du premier traitement d'opération ou un second résultat d'opération du second traitement d'opération, et dans lequel
si la première unité de comparaison (13) détermine que le premier code ne correspond pas au second code, alors l'unité de délivrance de signal délivre un signal d'annonce d'anormalité.

4. Instrument à double champ conformément à la revendication 1, comprenant en outre :
une première unité d'échange d'informations (12) qui reçoit le premier code de la première unité d'analyse de code (11d), la première unité d'échange d'informations (12) recevant le second code de la seconde unité d'échange d'informations (22), la première unité d'échange d'informations (12) délivrant le premier code et le second code à la première unité de comparaison (13) ;
la seconde unité d'échange d'informations (22) qui reçoit le second code de la seconde unité d'analyse de code (21d), la seconde unité d'échange d'informations (22) recevant le premier code de la première unité d'échange d'informations (12), la seconde unité d'échange d'informations (22) délivrant le premier code et le second code à une seconde unité de comparaison ; et
la seconde unité de comparaison (23) qui reçoit le premier code et le second code de la seconde unité d'échange d'informations (22), la seconde unité de comparaison (23) comparant le premier code et le second code de manière à déterminer si le premier code correspond ou non au second code, et
dans lequel la première unité de comparaison (13) reçoit le premier code et le second code de la première unité d'échange d'informations (12).

5. Instrument à double champ conformément à la revendication 1 comprenant en outre :
le premier microprocesseur (11) reçoit une valeur de mesure de capteur, le premier microprocesseur (11) exécutant un premier traitement d'opération afin de générer une première valeur de sortie, le premier microprocesseur (11) délivrant un premier code ;
le second microprocesseur (21) reçoit la valeur de mesure de capteur, le second microprocesseur (21) exécutant un second traitement d'opération afin de générer une seconde valeur de sortie, le second microprocesseur (21) délivrant un second code, le second traitement d'opération étant le même que le premier traitement d'opération ;
une première unité d'échange d'informations (12) qui reçoit le premier code du premier microprocesseur (11), la première unité d'échange d'informations (12) recevant le second code d'une seconde unité d'échange d'informations (22), la première unité d'échange d'informations (12) délivrant le premier code et le second code à la première unité de comparaison (13) ;
une seconde unité d'échange d'informations (22) qui reçoit le second code du second microprocesseur (21), la seconde unité d'échange d'informations (22) recevant le premier code de la première unité d'échange d'informations (12), la seconde unité d'échange d'informations (22) délivrant le premier code et le second code à une seconde unité de comparaison (23) ;
la première unité de comparaison (13) qui reçoit le premier code et le second code de la première unité d'échange d'informations (12) ; et
une seconde unité de comparaison (23) qui reçoit le premier code et le second code de la seconde unité d'échange d'informations (22), la seconde unité de comparaison (23) comparant le premier code et le second code de manière à déterminer si le premier code correspond ou non au second code.

6. Instrument à double champ conformément à la revendication 5, dans lequel
si la première unité de comparaison (13) détermine que le premier code ne correspond pas au second code, alors la première unité de comparaison délivre un premier signal de détection de divergence, et
si la seconde unité de comparaison (23) détermine que le premier code ne correspond pas au second code, alors la seconde unité de comparaison délivre un second signal de détection de divergence.

7. Instrument à double champ conformément à la revendication 6 comprenant en outre :
une première unité de délivrance de signal normalisé qui reçoit la première valeur de sortie du premier microprocesseur (11), l'unité de délivrance de signal normalisé (4) recevant la seconde valeur de sortie du second microprocesseur (21), l'unité de délivrance de signal normalisé (4) recevant le premier signal de détection de divergence de la première unité de comparaison (13), l'unité de délivrance de signal normalisé (4) recevant le second signal de détection de divergence de la seconde unité de comparaison (23), l'unité de délivrance de signal normalisé (4) délivrant un courant de signal normalisé.

8. Instrument à double champ conformément à la revendication 7, dans lequel
si ni le premier signal de détection de divergence ni le second signal de détection de divergence n'est entré dans l'unité de délivrance de signal normalisé (4), alors l'unité de délivrance de signal normalisé délivre un courant compris entre 4 et 20 mA en tant que courant de signal normalisé, sur la base d'au moins l'une parmi la première valeur de sortie du premier microprocesseur (11) et la seconde valeur de sortie du second microprocesseur (21).

9. Instrument à double champ conformément à la revendication 7, dans lequel
si au moins l'un parmi le premier signal de détection de divergence et le second signal de détection de divergence sont entrés dans l'unité de délivrance de signal normalisé (4), alors l'unité de délivrance de signal normalisé (4) délivre un courant d'annonce d'anormalité prédéfini en tant que courant de signal normalisé.

10. Instrument à double champ conformément à la revendication 7, dans lequel
si la première valeur de sortie provenant du premier microprocesseur (11) est différente de la seconde valeur de sortie provenant du second microprocesseur (21), alors l'unité de délivrance de signal normalisé (4) délivre un courant d'annonce d'anormalité prédéfini en tant que courant de signal normalisé.

11. Instrument à double champ conformément à la revendication 5, dans lequel
le premier microprocesseur (11) comprend :
une première unité centrale de traitement (CPU) (11a) qui exécute le premier traitement d'opération ;
une première unité d'entrée-sortie (11 b) qui reçoit la valeur de mesure de capteur, la première unité d'entrée-sortie (11b) délivrant la première valeur de sortie ;
une première mémoire (11c) qui stocke un premier programme exécutant le premier traitement d'opération ;
une première unité d'analyse de code (11d) qui délivre le premier code d'observation de bus ;
une première adresse de bus (Ba) qui effectue une connexion entre la première unité CPU (11a), la première unité d'entrée-sortie (11b), la première mémoire (11c) et la première unité d'analyse de code (11d) ; et
un premier bus de données (Bd) qui effectue une connexion entre la première unité CPU (11a), la première unité d'entrée-sortie (11b), la première mémoire (11c) et la première unité d'analyse de code (11d), et
le second microprocesseur (21) comprenant :
une seconde unité CPU (21a) qui exécute le second traitement d'opération ;
une seconde unité d'entrée-sortie (21 b) qui reçoit la valeur de mesure de capteur, la seconde unité d'entrée-sortie (21 b) délivrant la seconde valeur de sortie ;
une seconde mémoire (21c) qui stocke un second programme exécutant le second traitement d'opération ;
une seconde unité d'analyse de code (21d) qui délivre le second code d'observation de bus ;
un second bus d'adresse (Ba) qui effectue une connexion entre la seconde unité CPU (21a), la seconde unité d'entrée-sortie (21b), la seconde mémoire (21c) et la seconde unité d'analyse de code (21d) ; et
un second bus de données (Bd) qui effectue une connexion entre la seconde unité CPU (21a), la seconde unité d'entrée-sortie (21b), la seconde mémoire (21c) et la seconde unité d'analyse de code (21d).

12. Instrument à double champ conformément à la revendication 11, dans lequel
la première unité CPU (11a) délivre un premier signal d'horloge de bus, la première unité d'analyse de code (11d) reçoit le premier signal d'horloge de bus,
la seconde unité CPU (21a) délivre un second signal d'horloge de bus, et la seconde unité d'analyse de code (21d) reçoit le second signal d'horloge de bus.

13. Instrument à double champ conformément à la revendication 12, dans lequel
la première unité d'analyse de code (11d) lit des premières données sur le premier bus d'adresse (Ba) et le premier bus de données (Bd), la première unité d'analyse de code (11d) code et compresse les premières données sur la base du premier signal d'horloge de bus afin de générer le premier code d'observation de bus,
la seconde unité d'analyse de code (21d) lit des secondes données sur le second bus d'adresse (Ba) et le second bus de données (Bd), et la seconde unité d'analyse de code (21d) code et compresse les secondes données sur la base du second signal d'horloge de bus afin de générer le second code d'observation de bus.

14. Instrument à double champ conformément à la revendication 11, dans lequel
la première unité d'analyse de code (11d) délivre un historique de modifications d'un motif de données dans chacun du premier bus d'adresse (Ba) et du premier bus d'adresse de données (Bd) en tant que premier code d'observation de bus,
la seconde unité d'analyse de code (21d) délivre un historique de modifications d'un motif de données dans chacun du second bus d'adresse de données (Ba) et du second bus de données (Bd) en tant que second code d'observation de bus, et
le premier code d'observation de bus et le second code d'observation de bus sont des codes de train de bits en série.

15. Instrument à double champ conformément à la revendication 13, dans lequel
si des données sur le premier bus d'adresse (Ba) sont comprises dans une zone d'adresse spécifiée, alors la première unité d'analyse de code (11d) code et compresse les premières données, et
si des données sur le second bus d'adresse (Ba) sont comprises dans une seconde zone d'adresse spécifiée, alors la seconde unité d'analyse de code (21d) code et compresse les secondes données.

16. Instrument à double champ conformément à la revendication 11, dans lequel
la première unité d'analyse de cde (11d) et la seconde unité d'analyse de code (21d) comprennent chacune un registre à décalage à rebouclage linéaire.
